# EUROPÄISCHE PATENTSCHRIFT

(11) **EP 2 763 787 B1**
(45) Veröffentlichungstag und Bekanntmachung des Hinweises auf die Patenterteilung: **14.04.2021**
(21) Anmeldenummer: 12805575.3
(22) Anmeldetag: 02.10.2012
(51) Int. Cl.: B01D 69/02, B01D 71/44, B01D 71/68, B01D 67/00

(54) **ABRASIONSBESTÄNDIGE FILTRATIONSMEMBRAN**
ABRASION-PROOF FILTRATION MEMBRANE
MEMBRANE DE FILTRATION RÉSISTANTE À L'ABRASION

(30) Priorität: 04.10.2011 DE 102011114634
(43) Veröffentlichungstag der Anmeldung: 13.08.2014
(73) Patentinhaber: Microdyn-Nadir GmbH, 65203 Wiesbaden (DE)
(72) Erfinder: JUNG, Gisela, 65199 Wiesbaden (DE); BARETH, Andreas, 65203 Wiesbaden (DE); MEYER-BLUMENROTH, Ulrich, 65510 Idstein-Wörsdorf (DE)
(74) Vertreter: Plate, Jürgen
(86) Internationale Anmeldenummer: PCT/EP2012/004122
(87) Internationale Veröffentlichungsnummer: WO 2013/050133

(56) Entgegenhaltungen:
- EP-A1- 2 324 906
- DE-A1-102008 021 190
- GB-A- 2 199 786
- US-A- 6 013 688
- US-A1- 2008 067 127

## Beschreibung

Die vorliegende Erfindung betrifft eine Filtrationsmembran, umfassend einen porösen Träger und eine Membranschicht mit einer ersten und zweiten Zone.

In einer Vielzahl industrieller und kommunaler Anwendungen, wie Abwasserreinigung und Meerwasserentsalzung werden seit Jahrzehnten Membran-gestützte Filtrationsverfahren, insbesondere die Crossflow-Filtration eingesetzt. Hierbei werden flächenhaft ausgebildete poröse Membranen tangential zur Membranoberfläche von einer zu reinigenden Flüssigkeit - weiterhin als Feed bezeichnet, überströmt. Die Porengröße der Membranen liegt je nach Anwendung im Bereich von wenigen Nanometern bis zu einigen Mikrometern. Das von dem Feed durchströmte Volumen, üblicherweise als Feedraum bezeichnet, ist durch die Membran von einem Permeatraum getrennt. Zwischen Feedraum und Permeatraum wird ein Differenzdruck von etwa 0,1 bar bis zu 100 bar angelegt, der einen Stofftransport vom Feedraum zum Permeatraum bewirkt, wobei Permeat (bzw. Filtrat) in den Permeatraum gelangt. Für die Abwasserbehandlung eingesetzte Membranbioreaktoren (MBR) werden vorzugsweise mit einem Differenzdruck im Bereich von 0,02 bis 0,4 bar betrieben.

Bei dem MBR-Verfahren wird das Abwasser in mehreren Schritten physikalisch, chemisch und biologisch vorbehandelt, bis es die Filtrationsmembran erreicht. Durch mechanischphysikalische Vorreinigung wird das Abwasser von Partikeln, Fasern und Grobstoffen befreit. Bei der Grobfiltration werden große Partikel, die Schäden an den Membranen verursachen können, durch Rechen und Siebe entfernt. Hieran anschließend werden üblicherweise Feinsiebe in einem Größenbereich von 0,05 - 3 mm zur Vorfiltration eingesetzt. Das Abwasser wird zudem durch einen Sand- und Fettfang von schweren Partikeln (z.B. Sand), Ölen und Fetten befreit.

In einem weiteren Verfahrensschritt wird das Abwasser biologisch und chemisch behandelt. In einem Belebungsbecken befindet sich Schlamm (Biomasse) mit Mikroorganismen, die hochmolekulare organische Schadstoffe enzymatisch umsetzen und eliminieren. Die nach der enzymatischen Umsetzung verbleibenden Stoffe werden von den Mikroorganismen entweder zum Zellaufbau oder zur Energiegewinnung unter Sauerstoffverbrauch genutzt. Der resultierende Sauerstoffverbrauch ist durch eine ausreichende Sauerstoffzufuhr abzudecken, weshalb Belebungsbecken mit Belüftungssystemen versehen sind. Voraussetzung für die Funktion des Verfahrens ist das Verbleiben der Biomasse im System. Daher wird die Biomasse durch Membranfiltration vom gereinigten Abwasser abgetrennt und in das Belebungsbecken zurückgeführt. Zugewachsener belebter Schlamm wird als Überschussschlamm entfernt. Bevor die Biomasse vom Wasser getrennt wird, werden bei Bedarf weitere chemische Behandlungen vorgenommen. Dabei werden in Verbindung mit einer Filtrationsstufe üblicherweise verschiedene Fällungs- und Flockungsmittel wie beispielsweise Eisenchlorid oder Polymere zur Entfernung von kolloidal und partikulär gelösten Flüssigkeitsinhaltsstoffen eingesetzt.

Einen wesentlichen Vorteil von MBR-Anlagen stellt der feststofffreie Ablauf dar. In dem Ablauf einer MBR-Anlage befinden sich keine Bakterien; durch Sorptionseffekte werden häufig sogar Viren abgetrennt. Dadurch wird die organische Restverschmutzung stark reduziert. Die hygienisch relevanten Leitwerte der EU-Badegewässerrichtlinie [75/160/EWG, 2006] werden mit MBR eingehalten. Ferner bietet der feststofffreie Ablauf sowohl im kommunalen als auch im industriellen Bereich ein großes Potenzial zur Abwasserwiederverwendung. Hier können durch Wasserrecycling bis hin zur Wasserkreislaufschließung große Wassereinsparungen erzielt werden. Ein weiterer Vorteil des MBR-Verfahrens besteht in der enormen Platzersparnis gegenüber dem konventionellen Belebungsverfahren. Die MBR-Module ersetzen die Nachklärung, die im konventionellen Verfahren durch große Nachklärbecken realisiert wird in denen die Biomasse sedimentiert. Die MBR-Module werden dazu in die Belebungsbecken getaucht oder in separaten Filterkammern eingesetzt. Neben dem Wegfall der Nachklärbecken kann der Platzbedarf weiter verringert werden, da aufgrund der Unabhängigkeit vom Sedimentationsverhalten die Belebtschlammkonzentration (Biomassekonzentration, ausgedrückt als TS - Trockensubstanz) gegenüber konventionellen Verfahren erhöht werden kann. Membranbioreaktoren werden üblicherweise mit TS-Konzentrationen von 8 bis 15 g/l betrieben und somit um den Faktor 2-3 höher als konventionelle Verfahren. Im Vergleich mit konventionellen Belebungsverfahren kann das Reaktorvolumen im MBR-Verfahren reduziert werden, so dass höhere Raumbelastungen möglich sind.

Filtrationsmembranen sind aus dem Stand der Technik bekannt. Einige der bekannten Filtrationsmembranen sind als zweilagiger Verbund aus einem Trägervlies und einer porösen Membranschicht ausgebildet. Vorzugsweise besteht die poröse Membranschicht aus Polyethersulfon, Polysulfon, Polyacrylnitril, Polyvinylidenfluorid, Polyamid, Polyetherimid, Celluloseacetat, Regeneratcellulose, Polyolefin oder Fluorpolymer. Die poröse Membranschicht wird beispielsweise erzeugt, indem ein Vlies oder Gewebe mit Polymerlösung beschichtet und das Polymer in einem nachfolgenden Phaseninversionsschritt ausgefällt wird. Alternativ hierzu wird eine Polymerfolie in geeigneter Weise verstreckt, wobei in der Polymerfolie Poren entstehen. Die verstreckte Polymerfolie wird dann zur mechanischen Stabilisierung auf ein Trägervlies auflaminiert. Nach diesen Methoden hergestellte Filtrationsmembranen sind kommerziell erhältlich, z.B. unter der Bezeichnung NADIR® Membranen (MICRODYN-NADIR GmbH, Wiesbaden) oder Celgard® Flat Sheet Membranes (Celgard Inc., Charlotte, NC, USA).

In dem Feed enthaltene Bestandteile, deren Durchmesser zu groß ist, um die Membranporen zu passieren, werden auf der Membranoberfläche zurück gehalten und bleiben teilweise haften. Bei der Crossflow-Filtration wird die Membranoberfläche permanent mit Feed überströmt, um die zurückgehaltenen Komponenten (Retentat) von der Membranoberfläche abzutransportieren. Auf diese Weise ist ein kontinuierlicher Filtrationsbetrieb mit konstantem Permeatfluss möglich. Die Crossflow-Betriebsweise resultiert in der typischen Bauform von Membranmodulen mit drei Anschlüssen bzw. Durchgängen für Feed, Retentat und Permeat. Membranmodule sind mit einem geschlossenen oder einem ein- oder mehrseitig offenen Gehäuse bzw. Rahmen ausgestattet, in welchem Flachfilterelemente oder in seltenen Fällen Wickelfilter gehaltert sind. Je nach Bauart weist ein Membranmodul zusätzlich zu Durchgängen zwischen den Filterelementen bzw. Durchgängen zwischen den Windungen des Wickelfilters ggf. an den Wänden des Gehäuses angeordnete Anschlüsse für Feed, Retentat und Permeat auf.

In einem Flachfilterelement wird der Permeatraum durch zwei separate Membranen oder durch zwei Teilflächen einer einstückigen Membran begrenzt. Zwischen den beiden Membranen bzw. Teilflächen ist ein poröser Permeatspacer angeordnet, der zum Einen als Stützstruktur für die empfindlichen Membranen dient, auf denen ein transmembraner Differenzdruck von bis zu 100 bar lastet, und zum Anderen Durchgänge bereitstellt, durch welche das Permeat entlang der Innenseiten der Membranen/Teilstücke abfließt. In einem Membranmodul mit mehreren Flachfilterelementen setzt sich der Permeatraum zusammen aus der Gesamtheit der Permeaträume aller Flachfilterelemente.

In Flachfiltermodulen ist eine Vielzahl von planaren Flachfilterelementen parallel zueinander in einem Stapel angeordnet. Zwischen jeweils zwei benachbarten Flachfilterelementen sind Abstandshalter angeordnet, die einen Durchgang freihalten, durch den Feed und Retentat zu- und abfließen können. Die Abstandshalter bestehen beispielweise aus Unterlegscheiben aus einem polymeren Werkstoff, die zwischen den Randbereichen bzw. Kanten, insbesondere den Ecken jeweils zwei benachbarter Flachfilterelemente angeordnet sind. Alternativ hierzu kann ein Rahmen oder Gehäuse verwendet werden, das mit äquidistanten Nuten zur Aufnahme der Ränder der Flachfilterelemente ausgestattet ist.

Für MBR geeignete Filtrationsmembranen weisen eine Trenngrenze von kleiner 400 nm und eine Betriebspermeabilität von mehr als 1001/ (m²·h·bar), vorzugsweise von mehr als 200 l/(m²·h·bar) auf. Die Trenngrenze bezeichnet den Durchmesser der kleinsten, von der Membran zurückgehaltenen Partikel. Aufgrund der Deckschichtbildung im Filtrationsbetrieb ist die effektive Trenngrenze deutlich geringer, so dass auch Viren im Bereich 25 nm größtenteils zurückgehalten werden.
Einer stark vereinfachten Modellvorstellung zufolge besteht eine Filtrationsmembran aus einem massiven Material, das von einer Vielzahl von zylindrischen, senkrecht zur Oberfläche der Filtrationsmembran orientierten Poren durchsetzt ist, wobei alle Poren den gleichen Durchmesser aufweisen. In diesem einfachen Modell entspricht die Trenngrenze dem Durchmesser der zylindrischen Poren. Reale Filtrationsmembranen weisen eine komplexe Morphologie mit unregelmäßigen, dreidimensional verzweigten und/oder gewundenen Poren bzw. Durchgängen auf. Die Poren realer Filtrationsmembranen weisen einen Bereich mit minimalem Durchmesser auf, der die Trenngrenze der jeweiligen Pore bestimmt. Der kleinste Porendurchmesser befindet sich im Idealfall an der Oberfläche der Filtrationsmembran, so dass sämtliche Partikel mit einem Durchmesser oberhalb der Trenngrenze nicht in die Poren eindringen und diese verstopfen können. Bei realen Filtrationsmembranen befindet sich der Porenbereich mit minimalem Durchmesser in einem von Pore zu Pore variierenden Abstand von der Membranoberfläche.

Für das MBR-Verfahren eingesetzte Filtrationsmembranen weisen eine stark asymmetrische Struktur mit einer 0,5 bis 1,0 µm dicken, feinporösen Trennschicht und einer 30 bis 100 µm dicken, grobporigen Stützschicht auf. Die Porendurchmesser der Trennschicht sind kleiner als 0,1 µm. Die fingerartigen Poren der Stützschicht werden in Fachkreisen häufig als Kavernen bezeichnet und haben Durchmesser von bis zu 20 µm. Die zweischichtige Struktur dieser bekannten Filtrationsmembranen gewährleistet eine Trenngrenze im Bereich von 0,03 bis 0,1 µm bei zugleich guter Klarwasserpermeabilität von 200 bis 1000 1 / (m²·h·bar). Diese Membranen werden im Herstellungsprozess mit einem Stabilisierungsmittel versehen. Das Stabilisierungsmittel verhindert beim Trocknen der Membranen ein Kollabieren der Poren in der dünnen, feinporösen Trennschicht. Das Kollabieren der Poren wird durch die enormen Kapillarkräfte beim Verdampfen von Wasser aus den kleinen Poren verursacht und ist irreversibel. Nach dem Auswaschen des Stabilisierungsmittels z.B. nach der Inbetriebnahme der Membranen dürfen diese nicht getrocknet werden, da dies zu einem irreversiblen Abfall der Klarwasserpermeabilität auf unter 10l/ (m²·h·bar) führen würde.

Ein Problem beim Einsatz von Membranfiltern auf dem Gebiet der Abwasserreinigung stellt das sogenannte "Membranfouling" dar, das darin besteht, dass sich auf den Membranen Beläge bilden, welche die Permeation und damit die Filtrationsleistung auf Werte von 50 bis 2001 / (m²·h·bar) herabsetzen.

Bei MBR-Verfahren werden verschiedene Methoden verwandt, um das Fouling zu bekämpfen:
(a) Vorbehandlung des Roh- oder Abwassers vor dem Einströmen in den Belebtschlamm mittels verschiedener, vorstehend erwähnter Filtrationsschritte, wozu feinmaschige Gitter mit einer Maschenweite von 0,5 bis 3 mm eingesetzt werden;
(b) Beim "Crossflow"-Verfahren wird die zu reinigende Flüssigkeit im Kreislauf an der Membranoberfläche entlanggeführt, wozu bei getauchten Modulen Belüftungsvorrichtungen unterhalb der Membranmodule installiert sind, die eine Aufwärtsströmung induzieren;
(c) Regelmäßige Rückspülung mit Permeat, so dass anhaftende Partikel/Verschmutzungen von der Membranoberfläche gelöst und die Poren frei gespült werden. Voraussetzung ist, dass die jeweilige Membran rückspülbar ist;
(d) Chemische Reinigung, wobei die Filtrationsmembranen außer Betrieb gesetzt sind und ggf. zusätzliche Membranen installiert werden müssen. Die bei der chemischen Reinigung verwendeten Chemikalien wie beispielsweise Natriumhypochlorit NaOCl belasten die Umwelt und bilden adsorbierbare organische Halogenverbindungen (AOX). Für die chemische Reinigung wird eine zusätzliche Infrastruktur benötigt (Pumpen, Chemikalienbehälter, Leckagedetektoren, Schutzausrüstung) die kostenintensiv ist. Oftmals werden die Membranen in einem separaten Reinigungsbehälter mit geringen Volumen gereinigt, um die Menge an Reinigungschemikalien zu verringern. Dazu muss das Membranmodul aus dem Filtrationsbecken entnommen und in den Reinigungsbehälter transferiert werden. Die chemische Reinigung verursacht beträchtliche Kosten und belastet die Umwelt.
(e) Zugabe von Reinigungsgranulat zu dem Belebtschlamm, wie beispielsweise in der Veröffentlichung der Firma VA TECH WABAG GmbH, Wien, Verfasser: F. Klegraf, mit dem Titel "Beherrschung von Fouling und Scaling an getauchten Filtrationssystemen in Membranbelebimgsanlagen" sowie in der Patentanmeldung DE 10 2008 021 190 A1 beschrieben. Hierbei wird mehr oder minder abrasiv wirkendes Granulat verwendet, welches in der Crossflow-Strömung mitgeführt wird und an der Oberfläche der Membranen entlang streift. Als Material für das Reinigungsgranulat sind u.a. Blähton und Polymere erprobt worden. Durch Siebe wird das Reinigungsgranulat in den Filterkammern der MBR-Anlage zurückgehalten. Die mit der Spülluft in den MBR eingetragene Turbulenz reicht aus, um das Reinigungsgranulat gleichförmig zu verteilen. Kurz nach der Befüllung der MBR-Anlage mit Reinigungsgranulat steigt die Filtrationsleistung an und durch Steigerung der Konzentration des Reinigungsgranulats im Belebtschlamm kann nach einiger Zeit die Filtrationsleistung auf 75 % des Ausgangswertes regeneriert werden. Weitere Erhöhung der Konzentration des Reinigungsgranulats verbessert die Filtrationsleistung nicht merklich. Der Einsatz von Reinigungsgranulat ist umstritten, da die sensiblen Oberflächen der Filtrationsembranen beschädigt werden.

Da bei den bekannten asymmetrischen Filtrationsmembranen die Trennschicht lediglich 0,5 bis 1,0 µm dick ist, sind diese äußerst empfindlich gegenüber der abrasiven Einwirkung von Reinigungsgranulat. In diesbezüglichen Abrasionsversuchen wurden massive Schädigungen und Durchbrüche der Trennschicht nachgewiesen. Die Klarwasserpermeabilitäten dieser Membranen steigen von 500 bis 1000 l/ (m²·h·bar) auf 10000 bis 50000 l / (m²·h·bar). Die mittleren Porendurchmesser dieser Membranen steigen von 0,03 bis 0,05 µm auf 1 bis 10 µm. Wird die Trennschicht durchbrochen und die Kavernen der grobporigen Stützschicht geöffnet, besteht die Gefahr, dass Belebtschlamm in die Membranstruktur eindringt, diese großflächig verstopft und so die Filtrationsleistung deutlich verschlechtert wird. Im schlimmsten Fall muss die MBR-Anlage außer Betrieb genommen und mit neuen Membranmodulen bestückt werden.

GB 2 199 786 A beschreibt eine Filtrationsmembran mit variierendem Porendurchmesser und einer innenliegenden Schicht in einem Abstand von 1 bis 30 µm von der Oberfläche, die Poren minimaler Größe enthält. Die Filtrationsmembran wird hergestellt, indem ein Träger mit einer Polymerlösung beschichtet, in der Oberfläche der Beschichtung eine Phasentrennung bewirkt und die Filtrationsmembran in ein Fällungsbad getaucht wird. Während der Phasentrennung wird die Oberfläche mit feuchter Luft überströmt.

EP 2 324 906 A1 betrifft ein Verfahren zur Herstellung einer integralen mehrschichtigen porösen Membran, indem simultan mehrere Polymerlösungen auf einen Träger aufgebracht und in einem Koagulationsbad gefällt werden. Die mehreren Polymerlösungen können identisch sein oder sich durch das Polymer, das Konzentrationsverhältnis oder ihre Viskosität voneinander unterscheiden.

US 2008/0067127 A1 offenbart ein Verfahren zur Abwasserbehandlung, wobei ein Membranmodul mit mehreren Filterelementen in das Abwasser getaucht wird. Jedes Filterelement umfasst eine Trägerplatte, eine Trennmembran und einen Auslass für Permeat. Die Trennmembran besteht aus einem Vlies und einer porösen Harzschicht auf mindestens einer Vliesoberfläche, wobei ein Teil der Harzschicht mit dem Vlies einen Verbund bildet.
DE 10 2008 021 190 A1 beschreibt ein Verfahren zur Reinigung von Membranmodulen für Abwasser und Belebtschlamm. Dabei wird ein Membranmodul in einem Reinigungstank einer zirkulierenden Flüssigkeitsströmung mit darin enthaltenen, nicht-porösen und biologisch widerstandsfähigen Partikeln ausgesetzt. Die gleichen Partikel werden auch dem zu reinigenden Abwasser, das in einem Filtrationstank mit einem oder mehreren Membranmodulen zirkuliert, zugesetzt.

US 6,013,688 A betrifft ein Verfahren zur Herstellung mikroporöser Membranen aus Polyvinylidenfluorid und mit den Membranen ausgerüstete Filtrationsvorrichtungen. Die Membranen zeichnen sich aus durch hohe Fließgeschwindigkeit, kleine nominelle Porengröße und eine im Vergleich zu herkömmlichen Membranen andere Struktur. In dem Verfahren wird das Polymer in einer Mischung aus zwei Lösungsmitteln bei einer Temperatur von 20 bis 50 °C gelöst und in einem Temperaturbereich von-10 bis 50 °C gefällt. Über die Zusammensetzung der Polymerlösung und die Prozesstemperaturen wird die Membranstruktur in gezielter Weise eingestellt.

Neben den vorstehend erwähnten stark asymmetrischen Filtrationsmembranen mit einer dünnen Trennschicht gefolgt von einer sehr grobporigen Stützschicht sind im Stand der Technik Filtrationsmembranen mit gradiertem Porenprofil bekannt. Derartige Membranen zeichnen sich durch eine Trenngrenze im Bereich 0,05 bis 0,4 µm und gute Abrasionsbeständigkeit gegenüber Reinigungsgranulat aus. Diese Membranen können zudem aufgrund der größeren Poren und der Porenstruktur ohne Stabilisierungsmittel getrocknet werden. Allerdings haben derartige Membranen eine niedrige Klarwasserpermeabilität von unter 150 1 / (m²·h·bar) und eine entsprechend reduzierte Betriebspermeabilität von 50 bis 100 1 / (m²·h·bar), so dass eine MBR-Anlage nicht ökonomisch betrieben werden kann.

Die vorliegende Erfindung hat die Aufgabe, eine Filtrationsmembran bereitzustellen, die eine ökonomische Filtrationsleistung und Permeabilität aufweist, abrasionsresistent ist und sich für den Einsatz von Reinigungsgranulat im MBR-Verfahren eignet.

Diese Aufgabe wird gelöst durch eine Filtrationsmembran gemäß Anspruch 1 Weiterbildungen der erfindungsgemäßen Filtrationsmembran sind dadurch gekennzeichnet, dass:
- die erste Zone eine Dicke von 8 bis 12 µm aufweist;
- die erste Zone eine mittlere Porenöffnung (mittleren Porenöffnungsdurchmesser) von kleiner/gleich 0,3 µm aufweist;
- die zweite Zone eine Dicke von 5 bis 30 µm aufweist;
- die zweite Zone eine Dicke von 10 bis 20 µm aufweist;
- die zweite Zone eine mittlere Porenöffnung von 0,4 bis 2,0 µm aufweist;
- die Filtrationsmembran einen mittleren Porendurchmesser von 0,04 bis 0,2 µm aufweist;
- die Filtrationsmembran einen mittleren Porendurchmesser von 0,08 bis 0,15 µm aufweist;
- die Filtrationsmembran eine Klarwasserpermeabilität von 300 bis 20001/ (m²·h·bar) aufweist;
- die Filtrationsmembran eine Klarwasserpermeabilität von 500 bis 1000 1/ (m²·h·bar) aufweist;
- die Filtrationsmembran nach einem Abrasionstest mit einer Dauer von 450 h eine Klarwasserpermeabilität von 500 bis 3000 l/ (m²·h·bar) aufweist;
- die Filtrationsmembran nach einem Abrasionstest mit einer Dauer von 450 h eine Klarwasserpermeabilität von 800 bis 1500 l/ (m²·h·bar) aufweist;
- die Filtrationsmembran nach einem Abrasionstest mit einer Dauer von 450 h einen mittleren Porendurchmesser von 0,05 bis 0,2 µm aufweist;
- die Filtrationsmembran nach einem Abrasionstest mit einer Dauer von 450 h einen mittleren Porendurchmesser von 0,08 bis 0,15 µm aufweist;

Im Wesentlichen unterscheiden sich die erste und zweite Zone der Membranschicht durch die mittlere Porenöffnung bzw. den mittleren Porenöffnungsdurchmesser, der durch das Herstellungsverfahren bedingt ist. Erfindungsgemäß kann die Membranschicht auch durch Fällung einer einschichtigen Polymerlösung hergestellt werden, so dass die erste Zone fließend in die zweite Zone übergeht.

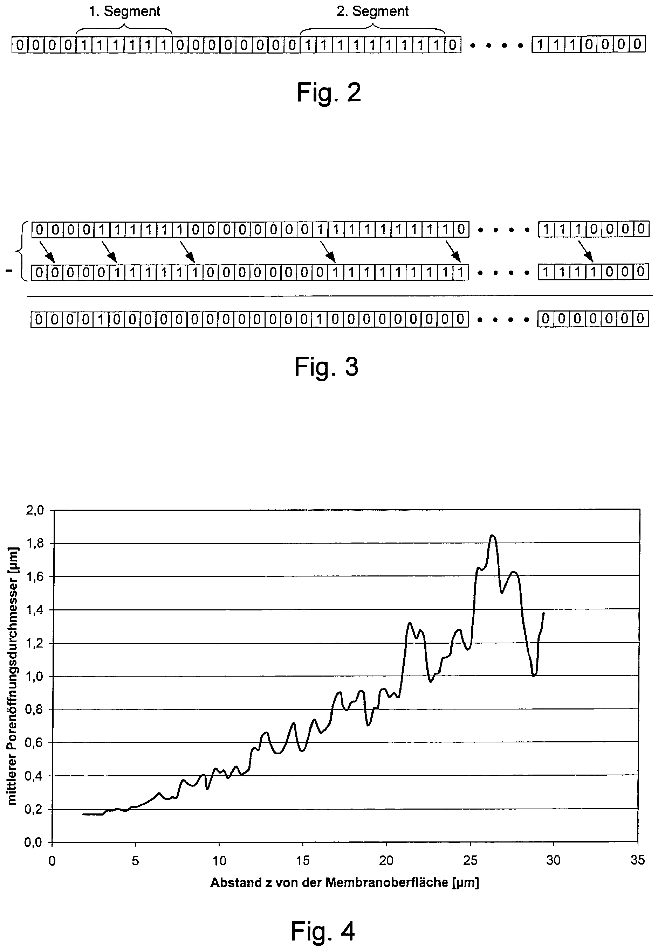

Der Begriff "mittlerer Gradient" bezeichnet im Rahmen der vorliegenden Erfindung die Steigung einer Regressionsgerade für die als Funktion des Abstandes von der Oberfläche der Filtrationsmembran aufgetragene mittlere Porenöffnung (mittleren Porenöffnungsdurchmesser), wie beispielsweise in Fig. 4 dargestellt.

Die Erfindung betrifft im Weiteren eine Filtrationsvorrichtung, die eine oder mehrere Filtrationsmembranen der vorstehend beschriebenen Art umfasst.

Ein Verfahren zur Herstellung von Filtrationsmembranen der vorstehend beschriebenen Art umfasst die Schritte:
- Bereitstellen eines bahnförmigen porösen Trägers;
- gegebenenfalls Beschichten des Trägers mit einer ersten Polymerlösung aus einem oder mehreren Polymeren und einem ersten Lösemittel, wobei die Konzentration des Polymers in dem ersten Lösemittel einen Wert K1 hat;
- Beschichten des Trägers mit einer zweiten Polymerlösung aus einem oder mehreren Polymeren und einem zweiten Lösemittel, wobei die Konzentration des Polymers in dem zweiten Lösemittel einen Wert K2 hat, der größer als K1 ist;
- Beaufschlagen der Oberfläche der zweiten Polymerlösung mit einem ersten dampfförmigen Fällungsbad; und
- Ausfällen der zweiten und gegebenenfalls ersten Polymerlösung, indem der mit der zweiten und gegebenenfalls ersten Polymerlösung beschichtete Träger durch ein zweites flüssiges Fällungsbad geführt wird.

Vorteilhafte Ausgestaltungen des ersten Verfahrens sind dadurch gekennzeichnet, dass:
- das erste und zweite Lösemittel identisch sind;
- das Polymer bzw. die Polymere der ersten und zweiten Polymerlösung die gleiche chemische Zusammensetzung haben;
- die Konzentration K1 im Bereich von 15-19% liegt;
- die Konzentration K2 im Bereich von 17-21% liegt;
- die Polymere der ersten und zweiten Polymerlösung gleichermaßen oder unabhängig voneinander gewählt sind aus der Gruppe, umfassend Polysulfon, Polyvinylpyrrolidon und Mischungen davon;
- das erste und zweite Lösemittel gleichermaßen oder unabhängig voneinander gewählt sind aus N-Methylpyrrolidon, N-Ethylpyrrolidon, Dimethylacetamid, Dimethylformamid, Aceton oder Mischungen davon;
- das erste Fällungsbad durch Erwärmen verdampft oder mittels einer Zerstäubungseinrichtung in ein Aerosol überführt wird; und/oder
- das erste und zweite Fällungsbad gleichermaßen oder unabhängig voneinander aus Wasser oder einer Mischung von Wasser mit einem oder mehreren Lösemitteln, gewählt aus der Gruppe, umfassend N-Methylpyrrolidon, N-Ethylpyrrolidon, Dimethylacetamid, Dimethylformamid, Aceton oder Mischungen davon, bestehen.

Ein alternatives zweites Verfahren zur Herstellung der erfindungsgemäßen Filtrationsmembranen umfasst die folgenden Schritte:
- Bereitstellen eines bahnförmigen porösen Trägers;
- Beschichten des Trägers mit einer Polymerlösung aus einem oder mehreren Polymeren und einem ersten Lösemittel; und
- Transport des Trägers mit der Polymerlösung durch ein erstes Fällungsbad, bestehend aus einem ersten Fällungsmittel, einem zweiten Lösemittel und gegebenenfalls Additiven über eine Strecke L von 0,4 bis 2,0 m, wobei die Konzentration des zweiten Lösemittels über die Strecke L von einem Ausgangswert von 10 bis 40 Vol-% auf einen Endwert von 0,5 bis 5 Vol-% abfällt.

Vorteilhafte Ausgestaltungen des zweiten Verfahrens sind dadurch gekennzeichnet, dass:
- der mit der Polymerlösung beschichtete Träger durch ein zweites Fällungsbad geführt wird, wobei das zweite Fällungsbad aus einem zweiten Fällungsmittel, gegebenenfalls einem dritten Lösemittel und gegebenenfalls Additiven besteht;
- das erste, zweite und dritte Lösemittel identisch sind;
- das erste und zweite Fällungsmittel identisch sind;
- die Polymere der Polymerlösung gewählt sind aus der Gruppe, umfassend Polysulfon, Polyvinylpyrrolidon und Mischungen davon;
- das erste, zweite und dritte Lösemittel gleichermaßen oder unabhängig voneinander gewählt sind aus N-Methylpyrrolidon, N-Ethylpyrrolidon, Dimethylacetamid, Dimethylformamid, Aceton oder Mischungen davon;
- die Konzentration der Polymere in der Polymerlösung 15 bis 21 Gew-% beträgt;
- die Konzentration des ersten Lösemittel in dem ersten Fällungsbad über die Strecke L mit einem Gradienten von 2,5 bis 98,8 Vol-% · m⁻¹, vorzugsweise 10 bis 98,8 Vol-% · m⁻¹ und insbesondere 20 bis 98,8 Vol-% · m⁻¹ abnimmt;
- der mit der Polymerlösung beschichtete Träger mit einer Geschwindigkeit von 1 bis 120 m/min, vorzugsweise 4 bis 30 m/min durch das erste Fällungsbad transportiert wird;
- das erste Fällungsmittel Wasser ist;
- die Konzentration des ersten Fällungsmittel in dem ersten Fällungsbad in einem Bereich von 60 bis 99,5 Vol-% variiert;
- das zweite Fällungsmittel Wasser ist; und/oder
- die Konzentration des zweiten Fällungsmittel in dem zweiten Fällungsbad 80 bis 99,9 Vol-%, vorzugsweise 90 bis 99,5 Vol-% und insbesondere 95 bis 99,5 Vol-% beträgt.

Die Erfindung wird nachfolgend anhand von Figuren näher erläutert. Es zeigen:
- Fig. 1: eine schematische Schnittansicht einer Membran;
- Fig. 2 - 3: Bildzeilen einer elektronenmikroskopischen Aufnahme;
- Fig. 4: die anhand von elektronenmikroskopischen Schnittaufnahmen bestimmte mittlere Porenöffnung (mittlerer Porenöffnungsdurchmesser) einer erfindungsgemäßen Membran als Funktion des Abstandes von der Membranoberfläche;
- Fig. 5: die mittlere Porenöffnung (mittlerer Porenöffnungsdurchmesser) einer Membran nach dem Stand der Technik;
- Fig. 6: Messkurven des trockenen und nassen Kapillarflußes einer erfindungsgemäßen Filtrationsmembran nach ASTM F 316-03 (2011);
- Fig. 7: die aus den Messkurven der Fig. 6 abgeleitete Verteilung der Porendurchmesser;
- Fig. 8a - 8b: Schnittansichten einer Prüfvorrichtung für die Abrasionsbeständigkeit von Filtrationsmembranen; und
- Fig. 9: eine Vorrichtung zur Herstellung von Filtrationsmembranen.

In der vorliegenden Anmeldung werden die erfindungsgemäßen Filtrationsmembranen anhand von direkt gemessenen bzw. aus Messwerten abgeleiteten Parametern beschrieben. Hierbei sind morphologische Begriffe, wie beispielweise Anzahl, Gestalt, Größe, Volumen, innere Oberfläche und Anordnung von Poren nicht wörtlich aufzufassen, sondern als direktes oder mittelbares Ergebnis einer Messung unter Berücksichtigung der zur Analyse der Messwerte herangezogenen Modelle und mathematischen Methoden zu verstehen.
Die erfindungsgemäßen Filtrationsmembranen werden insbesondere durch die folgenden vier Parameter charakterisiert:
- mittlere Porenöffnung (bzw. mittlerer Porenöffnungsdurchmesser),
- mittlerer Porendurchmesser,
- Klarwasserpermeabilität, und
- Abrasionsbeständigkeit,
die im Folgenden näher erläutert werden.

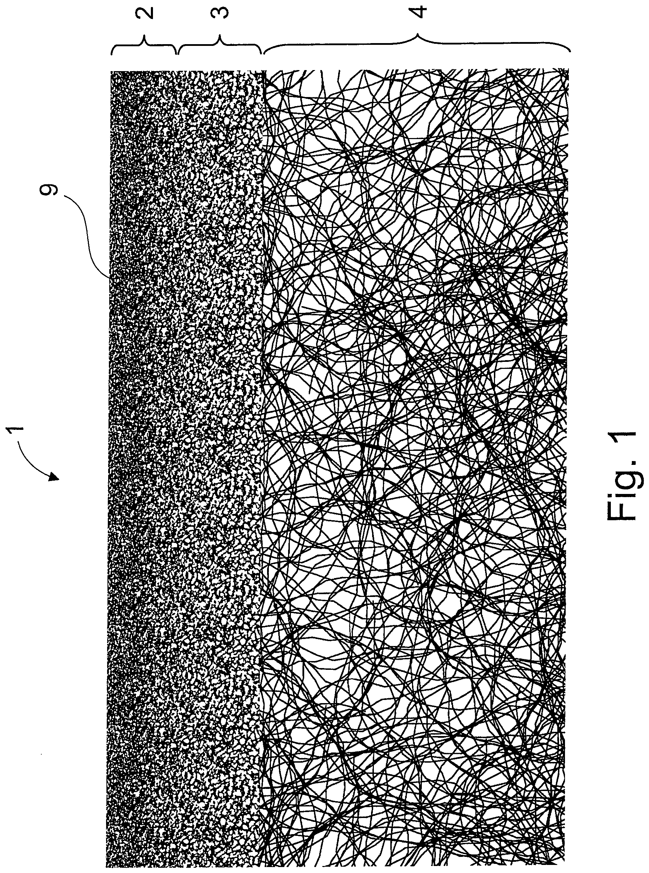

Fig. 1 zeigt eine schematische Schnittansicht einer erfindungsgemäßen Filtrationsmembran 1, umfassend eine Membranschicht (2, 3) mit Oberfläche 9 und einen porösen Träger 4, der vorzugsweise als Vlies aus synthetischen Fasern ausgebildet ist.

### Mittlere Porenöffnung (Mittlerer Porenöffnungsdurchmesser)

Die mittlere Porenöffnung bzw. der mittlere Porenöffnungsdurchmesser wird an Membran-Mikrotomschnitten mittels Rastertransmissionselektronenmikroskopie - nachfolgend als RTEM oder STEM bezeichnet - in Verbindung mit computergestützter Bildanalyse bestimmt. Hierzu wird aus der zu untersuchenden Filtrationsmembran ein Stück mit Abmessungen im Bereich von wenigen Zentimetern ausgestanzt, mit flüssigem Stickstoff gekühlt und mittels eines Ultra-Mikrotoms eine senkrecht zur Membranoberfläche 9 orientierte Dünnschnittprobe mit einer Dicke von 400 bis 600 nm geschnitten. Die Dünnschnittprobe wird auf einem mit Formvar beschichteten Kupfergitter angeordnet und durch Sputtern mit einer etwa 5 nm dicken Platinschicht ausgestattet. Das Kupfergitter mit der Platin-beschichteten Dünnschnittprobe wird auf dem Probenhalter eines RTEM, beispielsweise des Typs Philips CM 12, montiert. Anschließend wird die Probenkammer des RTEM auf einen Druck von etwa 10⁻⁶ mbar evakuiert und ein Bild der Dünnschnittprobe aufgezeichnet. Zur Aufnahme des Bildes wird ein fotografischer Film oder der Hellfelddetektor des RTEM benutzt. Die Strahlleistung des RTEM, insbesondere die Stromstärke des Elektronenstrahls wird minimiert, um eine Schädigung der Dünnschnittprobe weitgehend zu vermeiden.

Die mittels des RTEM abgebildete Fläche der Dünnschnittprobe ist rechteckig mit einer ersten, senkrecht zur Membranoberfläche 9 verlaufenden Rechteckseite H und einer zweiten, parallel zur Membranoberfläche 9 verlaufenden Rechteckseite B. Die Längen der Rechteckseiten H und B betragen mindestens 10 µm, respektive mindestens 30 µm, so dass die abgebildete Fläche eine Größe von mindestens 300 µm² hat.

Die maximale laterale Auflösung des RTEM liegt im Bereich von 0,5 bis 1 nm und ist bei Weitem ausreichend, um Poren mit einem Durchmesser bis hinab zu 10 nm zuverlässig aufzulösen. Bei einer Auflösung von etwa 1 nm umfassen die mit dem RTEM aufgezeichneten Bilder mindestens 3×10⁸ Bildelemente bzw. Pixel, was bei einem Graustufenbild mit 8 Bit Farbtiefe bzw. 256 Graustufen einem Datenvolumen von 300 MB entspricht. Wird der Hellfelddetektor des RTEM zur Aufzeichnung des Bildes verwendet, werden die Signale bzw. Bilddaten während des Rasterns des Elektronenstrahls in einen DRAM-basierten Pufferspeicher geschrieben und auf eine Festplatte übertragen. Alternativ hierzu kann das Bild mittels eines fotografischen Films aufgezeichnet werden.

Die Dünnschnittproben umfassen mit Platin beschichtetes Membranmaterial, das mit Porenöffnungen durchsetzt ist. Der Elektronenstrahl tritt ungehindert durch die Porenöffnungen und wird mit maximaler Intensität detektiert, während das mit Platin beschichtete Membranmaterial den primären Elektronenstrahl praktisch vollständig absorbiert, so dass keine Intensität registriert wird. Daher zeichnet sich das mit dem RTEM aufgezeichnete Bild einer Dünnschnittprobe durch einen hohen Kontrast aus. Aufgrund des hohen RTEM-Kontrastes weist das Grauwerthistogramm der RTEM-Aufnahmen ein bimodales Profil mit einem deutlich ausgeprägten Minimum G_{Min} auf, wobei dunkle Bildbereiche bzw. Pixel mit Grauwert kleiner G_{Min} Membranmaterial und helle Pixel mit Grauwert größer G_{Min} Porenöffnungen repräsentieren. Somit kann bei der Bildanalyse anhand des Grauwertminimums G_{Min} jeder Bildbereich bzw. jedes Pixel eindeutig als Membranmaterial oder Porenöffnung identifiziert werden. Im Wesentlichen entsprechen die RTEM-Aufhahmen der Dünnschnittproben Binärbildern, bei denen jedes Pixel entweder schwarz (Grauwert 0) oder weiß (Grauwert 255) ist.

Wird für die Aufzeichnung der RTEM-Bilder statt des Hellfelddetektors fotografischer Film verwendet, so werden die Filmnegative bzw. davon erzeugte Abzüge mittels eines Scanners digitalisiert. Hierzu wird ein kommerziell erhältlicher Flachbett- oder Negativscanner mit einer optischen Auflösung von 4800 dpi bzw. 7200 dpi eingesetzt.

Die mittels des RTEM bzw. des optionalen Fotoscans erhaltenen Digitalbilder werden einer computergestützten Bildanalyse unterzogen, die folgende Schritte umfasst:
- Berechnung des Grauwerthistogramms und Bestimmung des Minimums G_{Min}, d.h. Bestimmung des Grauwertes mit der geringsten Häufigkeit bzw. der kleinsten Zahl von Pixeln mit diesem Grauwert;
- Umwandlung in ein Binärbild mit dem zuvor bestimmten Minimum G_{Min} als Schwelle, wobei allen Pixeln mit einem Farbwert kleiner/gleich G_{Min}, der Grauwert 0 (= schwarz) und allen anderen Pixeln der Grauwert 255 (= weiß) zugeordnet wird (zwecks Reduzierung der Datenmenge um 1/8 ist es zweckmäßig, den Grauwert weiß durch die Zahl bzw. das Bit 1 zu repräsentieren);
- zeilenweise Analyse des Binärbildes mit parallel zur Membranoberfläche 9 verlaufenden Bildzeilen, indem
   (i) alle Pixelwerte der Bildzeile summiert werden, wobei die Summe der Pixelwerte der Gesamtlänge aller weißen Zeilensegmente entspricht (bzw. der 255-fachen Gesamtlänge, falls der Grauwert weiß durch die Zahl 255 repräsentiert wird);
   (ii) von der Bildzeile eine um ein Pixel verschobene Kopie subtrahiert und die Summe der Differenzzeile berechnet wird, wobei die Summe der Differenzzeile der Anzahl (bzw. der 255-fachen Anzahl) der weißen Segmente in der Bildzeile entspricht;
   (iii) der Quotient der in den Schritten (i) und (ii) ermittelten Summen berechnet wird; dieser Quotient repräsentiert die mittlere Länge der weißen Segmente der Bildzeile;
- Wiederholung der Schritte (i) bis (iii) für alle übrigen parallel zur Membranoberfläche 9 verlaufenden Bildzeilen.

Die parallel zur Membranoberfläche 9 verlaufenden Bildzeilen des Binärbildes entsprechen Vektoren bzw. n-Tupeln. Eine Bildzeile kann beispielsweise die in Fig. 2 dargestellten Grauwerte enthalten, worin das erste und zweite weiße Segment eine Länge von 6, respektive 8 aufweisen. Dementsprechend tragen das erste und zweite weiße Segment die Summanden 6 und 8 zu der gemäß Schritt (i) berechneten Summe der Bildzeile bei.

Fig. 3 illustriert den Schritt (ii), in dem die Anzahl der weißen Segmente der Bildzeile ermittelt wird, wobei von der Bildzeile eine um ein Pixel verschobene Kopie subtrahiert wird mit der Vorschrift, dass der Pixeldifferenz "0 - 1" das Resultat 0 zugeordnet wird.

Die Anzahl der weißen Segmente der Bildzeile ergibt sich dann aus der Summe der Pixelwerte der Differenzzeile.

Die Schritte (i) bis (iii) zur zeilenweisen Berechnung der mittleren Länge der weißen Segmente, d.h. der mittleren Porenöffnung bzw. des mittleren Porenöffnungsdurchmessers sind softwaretechnisch mit geringem Aufwand implementierbar. Mit einem handelsüblichen Personal Computer mit mehrkernigem Mikroprozessor der Firma Intel oder AMD und 4 GB Arbeitsspeicher kann eine RTEM-Aufnahme einer Dünnschnittprobe mit einer Bilddateigröße von 600 MB in einer Zeit von unter 10 Sekunden analysiert werden.

Die nach der vorstehenden Methode bestimmte mittlere Porenöffnung bzw. mittlere Porenöffhungsdurchmesser repräsentiert die Porenöffnung, die für eine die Filtrationsmembran in der Ebene der Dünnschnittprobe und senkrecht zur Membranoberfläche 9 durchströmende Flüssigkeit als Passage zur Verfügung steht. Die mittlere Porenöffnung bzw. der mittlere Porenöffnungsdurchmesser enthält unvollständige Information über die dreidimensionale Porenstruktur; es handelt sich um eine Reduktion der dreidimensionalen Porenmorphologie auf einen "zweidimensionalen" Parameter.

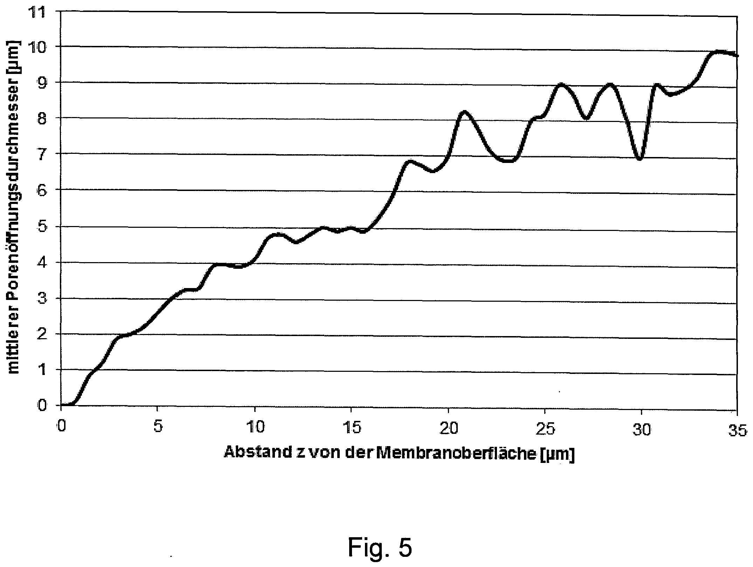

Fig. 4 zeigt das Ergebnis der Analyse einer Dünnschnittprobe einer erfindungsgemäßen Filtrationsmembran. Fig. 5 zeigt im Vergleich das Ergebnis einer Analyse einer aus dem Stand der Technik bekannten, stark asymmetrischen Membran.

### Mittlerer Porendurchmesser

Der mittlere Porendurchmesser ist abhängig von der Bestimmungsmethode. In der vorliegenden Anmeldung wird darunter der im englischsprachigen Raum üblicherweise als "mean flow pore diameter" bezeichnete Porendurchmesser verstanden, der gemäß der Norm ASTM F 316-03 (2011) mittels Kapillarflußporometrie bestimmt wird. Dieser mittlere Porendurchmesser repräsentiert den Mittelwert der äquivalenten Durchmesser der engsten Stellen aller Poren, welche die Filtrationsmembran durchsetzen und von einem Fluid durchströmbar sind. Vollständig geschlossene und undurchgängige Poren, die in einer Sackgasse enden, werden bei der Kapillarflußporometrie messtechnisch nicht erfasst.

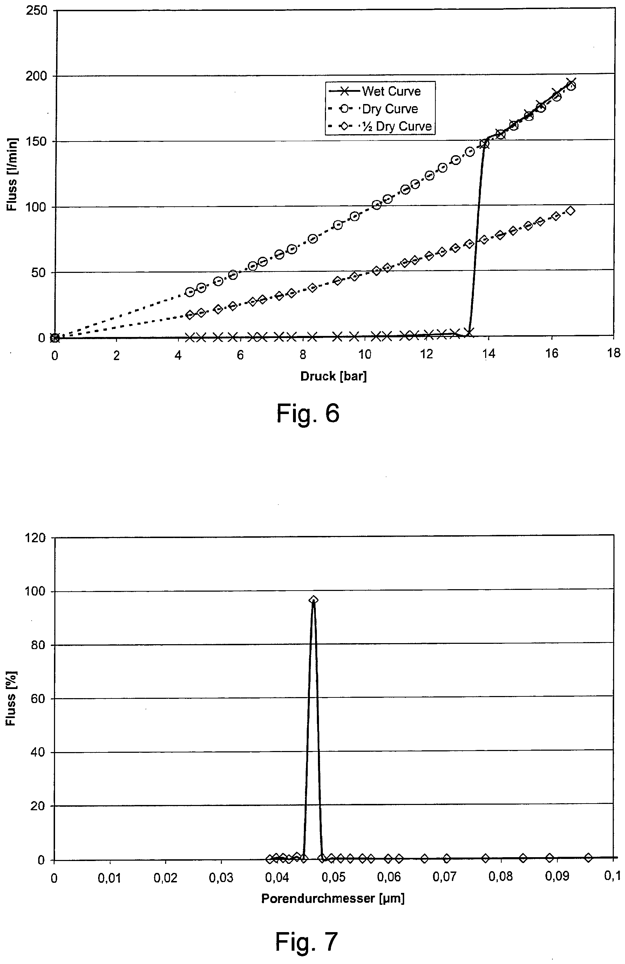

Die Messungen gemäß ASTM F 316-03 (2011) können beispielsweise mit Kapillarflußporometern der Firmen IB-FT, Quantachrome oder Porous Materials Inc. durchgeführt werden. Vorliegend wird ein Kapillarflußporometer des Typs POROLUX 1000 von IB-FT eingesetzt. Zur Benetzung der Filtrationsmembranen wird POREFIL (Oberflächenspannung 16 mN/m) von Benelux Scientific verwandt. Figuren 6 und 7 zeigen die Porometrie-Messkurven einer erfindungsgemäßen Filtrationsmembran mit einem mittleren Porendurchmesser von etwa 46 nm.

### Klarwasserpermeabilität

Die Klarwasserpermeabilität der erfindungsgemäßen Membranen wird mit vollentsalztem (VE) Wasser bei einer Temperatur von 20 °C in einem Druckbereich von 0,1 bis 1 bar mit üblichen Rührzellen (z.B. Amicon von Millipore) gemessen.

### Abrasionsbeständigkeit

Die Abrasionsbeständigkeit wird nach einer eigens entwickelten, sehr anwendungsnahen Prüfmethode bestimmt. Es handelt sich dabei um einen Miniatur-MBR-Reaktor ohnePermeatabsaugung. Der Reaktor wird mit Wasser und Reinigungsgranulat betrieben, welches durch Einblasen von Luft im Reaktor zirkuliert und abrasiv auf die Membranoberfläche wirkt. Die spezifische Granulatmenge und die spezifische Luftmenge ist im Vergleich zur realen Anwendung sehr hoch, um die Abrasion zu beschleunigen und in kurzer Zeit aussagefähige Ergebnisse zu erhalten.

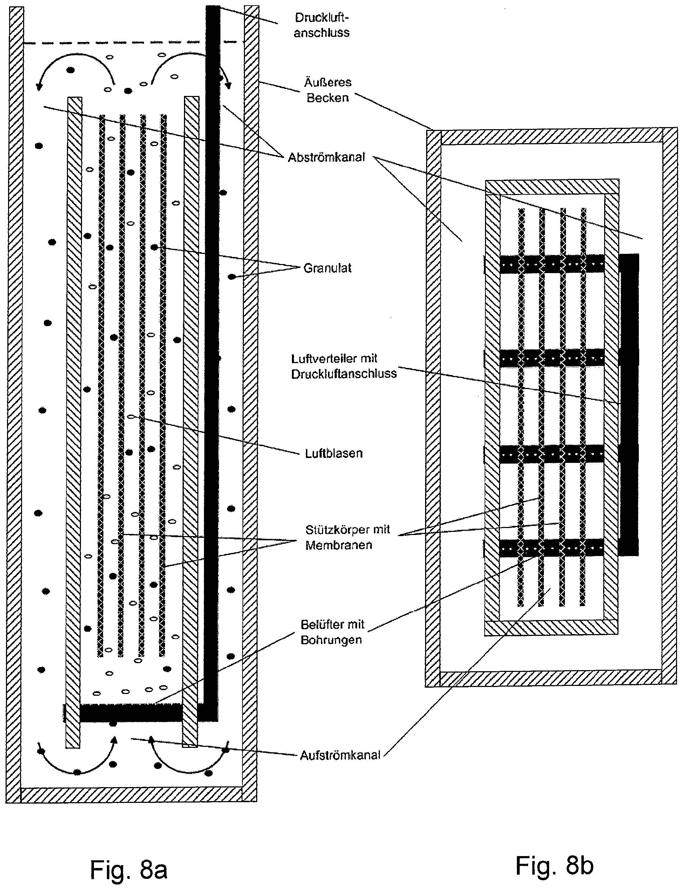

Fig. 8a und 8b zeigen schematische Schnittansichten der Prüfapparatur aus seitlicher Perspektive und in Draufsicht. Die Prüfapparatur umfasst Flachmembranproben, die auf 2 mm dicke Stützkörper, wie beispielsweise PVC-Platten aufgespannt sind. Jeder der Stützköper ist 21 cm breit und 30 cm hoch. Um mehrere Proben gleichzeitig prüfen zu können, sind vier Stützkörper parallel zueinander in einem Gehäuse mit rechteckiger Grundfläche und offener Ober- und Unterseite, d.h. mit in vertikaler Richtung frei durchströmbarem Querschnittderart angeordnet, dass die Oberfläche der Stützkörper bzw. der auf die Stützkörper aufgespannten Flachmembranproben vertikal ausgerichtet sind. Die freien Spalte bzw. Abstände zwischen benachbarten Membranen bzw. Stützkörpern und zwischen den äußeren Membranen und der Gehäusewandung betragen jeweils 8 mm. Die freien Spalte bilden Aufströmkanäle für Wasser, Luftblasen und Reinigungsgranulat. In einem Abstand von 4 cm unterhalb der Membranen bzw. der Unterkante der Stützkörper ist ein Belüftungsystem zum Einblasen von Luft angebracht. Dieses besteht aus vier gleichmäßig über die Breite des Gehäuses angeordneten Kupferröhrchen mit 10 mm Außendurchmesser. Um Luft einzublasen, sind im Aufströmbereich, d.h. an der Oberseite der Kupferröhrchen Bohrungen mit einem Durchmesser von 0,5 mm in einem Abstand von 5 mm zueinander angebracht. Die vier Belüfterröhrchen sind über einen gemeinsamen Luftverteiler verbunden und werden über einen Anschluss mit Druckluft versorgt. Das Gehäuse mit den Membranen und dem Belüftungssystem ist vollständig in ein mit Wasser gefülltes Becken eingetaucht. Das Becken ist derart dimensioniert dass der horizontale Abstand zwischen den Innenwänden des Beckens und den Außenwänden des Gehäuses jeweils 20 mm beträgt. Die freien Spalte zwischen den Innenwänden des Beckens und den Außenwänden des Gehäuses bilden Abströmkanäle, in denen Wasser und Reinigungsgranulat nach unten strömen.

Die Prüfapparatur wird mit Trinkwasser und Reinigungsgranulat aus thermoplastischen Elastomeren auf Polyurethanbasis betrieben. Die Dichte des Granulats beträgt 1,02 - 1,04 kg/L. Die Granulatpartikel haben eine linsenförmige Gestalt (Ellipsoid) mit einem kleinsten Durchmesser von etwa 3,5 mm und einem größten Durchmesser von etwa 5 mm. Die Beladung des Reaktors mit Reinigungsgranulat beträgt 60 kg Granulat pro m³ Wasser und ist ca. um den Faktor 10 größer als in der realen Anwendung.

Die Apparatur wird mit einem Gesamtluftvolumenstrom von 6 m³/h betrieben. Die Luftmenge bezogen auf die gesamte überströmte Querschnittsfläche wird auch als Leerrohrgeschwindigkeit bezeichnet und beträgt ca. 0,18 m/s und ist somit um das 4-fache größer als in der realen Anwendung. Aufgrund der großen Luftmenge wird Wasser ausgetragen. Ein konstanter Wasserstand wird durch ständiges Nachfüllen von Wasser und einen Überlauf realisiert.

Unter den vorstehend genannten Bedingungen wird die Apparatur über 450 h kontinuierlich betrieben. Danach werden die Membranproben ausgebaut und gemäß der oben beschriebenen Methoden (Klarwasserpermeabilität, mittlerer Porendurchmesser) charakterisiert.

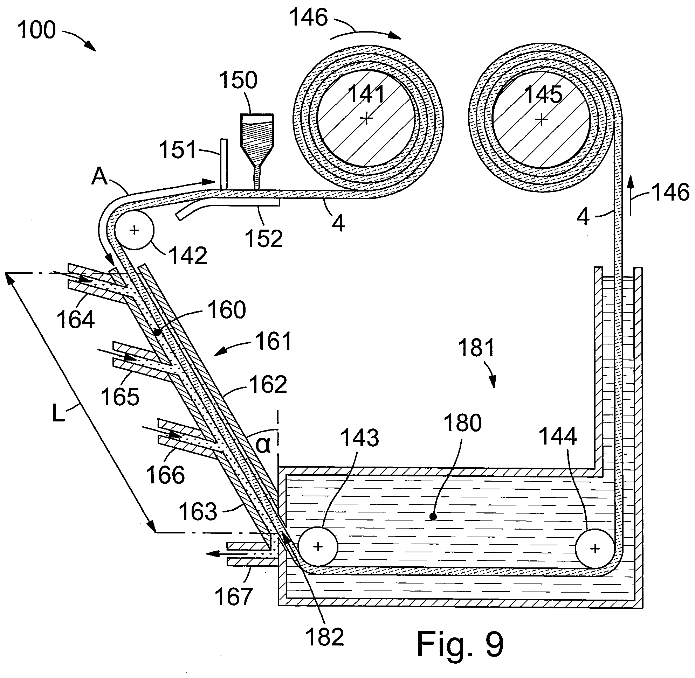

Fig. 9 zeigt eine Vorrichtung 100 für die Herstellung von Filtrationsmembranen gemäß dem zweiten erfindungsgemäßen Herstellungsverfahren. Die Vorrichtung 100 umfasst mehrere Rollen 141, 142, 143, 144 und 145 für die Bereitstellung bzw. Abwicklung, den Transport und die Aufwicklung eines bahnförmigen porösen Trägers 4. Die Abwicklung, der Transport und die Aufwicklung des Trägers 4 ist durch Pfeile 146 angedeutet. Die Geschwindigkeit, mit welcher der Träger transportiert wird, beträgt 1 bis 120 m/min, vorzugsweise 4 bis 30 m/min.

Mittels einer bekannten Sprüheinrichtung, einer Gravurwalze oder einer Gießeinrichtung 150 wird eine Polymerlösung auf den Träger 4 aufgebracht und mittels eines Rakels 151 in eine Schicht mit im Wesentlichen konstanter Dicke geformt. Zweckmäßig ist unterhalb der Sprüheinrichtung, Gravurwalze oder Gießeinrichtung 150 und dem Rakel 151 eine im Wesentlichen plane und glatte Auflage 152 angeordnet, über welche der Träger 4 gleitet. Die Dicke der auf den Träger 4 aufgebrachten Schicht aus Polymerlösung wird in bekannter Weise über den Spalt und/oder die Kraft, mit welcher der Rakel 151 gegen die Auflage 152 gepresst wird, eingestellt.

Nach dem Auftrag der Polymerlösung wird der mit Polymerlösung beschichtete Träger 4 über eine Luftstrecke A in ein erstes Fällungsbad 160 geführt, Die Länge der von dem Träger 4 in dem ersten Fällungsbad 160 durchlaufenen Strecke L beträgt 0,4 bis 2,0 m. Das erste Fällungsbad 160 wird in einem Kanal 161 mit kleinem Volumen bereitgestellt. Der Kanal 161 ist in Form eines flachen Rohres mit rechteckigem Querschnitt ausgebildet und in der Zeichnungsebene der Fig. 9 durch zwei zueinander parallel angeordnete Wände 162 und 163 begrenzt. Der Abstand bzw. die lichte Weite zwischen den Wänden 162 und 163 beträgt 5 bis 50 mm, vorzugsweise 5 bis 20 mm, um das Volumen des ersten Fällungsbades 160 möglichst gering zu halten. Die Wände 162 und 163 sind gegenüber der Vertikalen, d.h. in der Zeichnungsebene der Fig. 9 um einen Winkel α mit 10° ≤ α ≤ 80°, vorzugsweise 20° ≤ α ≤ 70° geneigt.

Der Kanal 161 ist mit einer oder mehreren Zuleitungen 164, 165, 166 und mindestens einer Ableitung 167 ausgestattet. Die Zuleitungen 164, 165 und 166 sind vorzugsweise entlang der Strecke L in einem konstanten Abstand D zueinander angeordnet. Jede der Zuleitungen 164, 165, 166 ist mit einem, in Fig. 9 nicht gezeigten Vorlagebehälter für eine Fällungsflüssigkeit verbunden, wobei die Konzentration an Lösemittel in der Fällungsflüssigkeit entlang der Strecke L in Transportrichtung 146 des Trägers 4 abnimmt. Vorzugsweise sind die Zuleitungen 164, 165, 166 mit, in Fig. 9 nicht gezeigten, elektronisch regelbaren Ventilen ausgestattet, welche es ermöglichen, die dem Kanal 161 pro Zeiteinheit aus dem jeweiligen Vorlagebehälter zugeführte Menge an Fällungsflüssigkeit mit einer vorgegebenen Konzentration an Lösemittel zu steuern.

In einer vorteilhaften Ausgestaltung der Vorrichtung 100 sind im Inneren des Kanals 160 zudem ein oder mehrere elektrochemische oder spektroskopische Inline-Sensoren angeordnet, mit denen die Konzentration an Lösemittel in dem ersten Fällungsbad entlang der Strecke L gemessen und die entsprechenden Messwerte als Eingangssignale an eine speicher-programmierbare Steuerung (SPS) gelegt werden. In einer derartigen erfindungsgemäßen Ausführungsform der Vorrichtung 100 sind die elektronisch regelbaren Ventile in den Zuleitungen 164, 165, 166 an die speicher-programmierbare Steuerung angeschlossen, so dass ein Regelkreis für die Einstellung des Lösemittel-Konzentrationsgradienten in dem ersten Fällungsbad 160 geschaffen wird.

Die mindestens eine Ableitung 167 ist zweckmäßig am Ende der Strecke L bzw. nahe der tiefsten Stelle des Kanals 161 angeordnet und mit einem, in Fig. 9 nicht gezeigten Auffangbecken sowie gegebenenfalls mit einer Einrichtung für die Rückgewinnung von Lösemittel bzw. für die Aufbereitung und Rezirkulation des ersten Fällungsbades 160 verbunden. In einer zweckmäßigen Ausgestaltung der Vorrichtung 100 ist die Ableitung 167 mit einer Saugpumpe verbunden, die am Ende der Strecke L einen geringen Unterdruck erzeugt und den fluidischen Übertrag von dem ersten Fällungsbad 160 in ein nachfolgendes zweites Fällungsbad 180 reduziert.

Der Kanal 161 ist mit einem zweiten Fällungsbad 180 verbunden, das in einem Behälter 181 gehalten wird. Das erste Fällungsbad 160 steht mit dem zweiten Fällungsbad 180 über eine Öffnung 182 in fluidischer Verbindung. Der mit Polymerlösung beschichtete Träger 4 wird durch die Öffnung 182 geführt. Die Öffnung 182 ist derart dimensioniert, dass der Abstand zwischen dem Träger 4 und dem die Öffnung 182 begrenzenden Rand 3 bis 15 mm, vorzugsweise 3 bis 10 mm und insbesondere 3 bis 8 mm beträgt und der fluidische Übertrag von dem ersten Fällungsbad 160 in das zweite Fällungsbad 180 minimiert wird.

Nach Austritt aus dem zweiten Fällungsbad 180 wird der Träger 4 mit der durch Fällung der Polymerlösung erhaltenen Membranschicht gegebenenfalls durch einen, in Fig. 9 nicht gezeigten Trockner und/oder eine Imprägniereinrichtung geführt und auf die Rolle 145 gewickelt.

## Patentansprüche

1. Filtrationsmembran (1), bestehend aus einem als textiles Vlies ausgebildeten porösen Träger (4) und einer Membranschicht mit einer ersten Zone (2) und einer zwischen der ersten Zone (2) und dem Träger (4) angeordneten zweiten Zone (3), **dadurch gekennzeichnet, dass** die erste Zone (2) eine Dicke von 5 bis 15 µm und eine mittlere Porenöffnung von < 0,4 µm und die zweite Zone (3) eine Dicke von 5 bis 40 µm und eine mittlere Porenöffnung von 0,4 bis 5,0 µm aufweist, in der ersten Zone (2) die mittlere Porenöffnung mit einem mittleren, durch die Steigung einer Regressionsgerade bestimmten Gradienten von 20 bis 80 nm pro 1 µm Abstand von einer von dem Träger (4) abgewandten Oberfläche (9) der Filtrationsmembran (1) zunimmt, in der zweiten Zone (3) die mittlere Porenöffnung mit einem mittleren, durch die Steigung einer Regressionsgerade bestimmten Gradienten von 200 bis 800 nm pro 1 µm Abstand von der Oberfläche (9) zunimmt, wobei die mittlere Porenöffnung an Membran-Mikrotomschnitten mittels Rastertransmissionselektronenmikroskopie gemessen wird, wie in der Beschreibung im Abschnitt "Mittlere Porenöffnung" definiert, die erste und zweite Zone (2, 3) aus Polysulfon und Polyvinylpyrrolidon bestehen und die Filtrationsmembran (1) eine mit voll entsalztem Wasser bei einer Temperatur von 20 °C und in einem Druckbereich von 0,1 bis 1 bar gemessene Klarwasserpermeabilität von 200 bis 3000 l / (m²·h·bar) hat.

2. Filtrationsmembran (1) nach Anspruch 1, **dadurch gekennzeichnet, dass** die erste Zone (2) eine Dicke von 8 bis 12 µm aufweist.

3. Filtrationsmembran (1) nach Anspruch 1 oder 2, **dadurch gekennzeichnet, dass** die erste Zone (2) eine mittlere Porenöffnung von ≤ 0,3 µm aufweist.

4. Filtrationsmembran (1) nach einem oder mehreren der Ansprüche 1 bis 3, **dadurch gekennzeichnet, dass** die Filtrationsmembran (1) einen gemäß ASTM F316-03 (2011) mit einem Kapillarflussporometer gemessenen mittleren Porendurchmesser von 0,04 bis 0,2 µm, vorzugsweise von 0,08 bis 0,15 µm aufweist.

5. Filtrationsmembran (1) nach einem oder mehreren der Ansprüche 1 bis 4, **dadurch gekennzeichnet, dass** die Filtrationsmembran (1) eine mit voll entsalztem Wasser bei einer Temperatur von 20 °C und in einem Druckbereich von 0,1 bis 1 bar gemessene Klarwasserpermeabilität von 300 bis 2000 l/ (m²·h·bar) und insbesondere von 500 bis 1000 l/(m²·h·bar) aufweist.

6. Filtrationsmembran (1) nach einem oder mehreren der Ansprüche 1 bis 5, **dadurch gekennzeichnet, dass** die zweite Zone (3) eine Dicke von 5 bis 30 µm, vorzugsweise von 10 bis 20 µm aufweist.

7. Filtrationsmembran (1) nach einem oder mehreren der Ansprüche 1 bis 6, **dadurch gekennzeichnet, dass** die zweite Zone (3) eine mittlere Porenöffnung von 0,4 bis 2,0 µm aufweist.

8. Filtrationsmembran (1) nach einem oder mehreren der Ansprüche 1 bis 7, **dadurch gekennzeichnet, dass** sie nach einem Abrasionstest mit einer Dauer von 450 h eine Klarwasserpermeabilität von 500 bis 3000 l/(m²·h·bar), vorzugsweise 800 bis 1500 l / (m²·h·bar) aufweist, wobei der Abrasionstest gemäß der Beschreibung im Abschnitt "Abrasionsbeständigkeit" durchgeführt wird.

9. Filtrationsmembran (1) nach einem oder mehreren der Ansprüche 1 bis 8, **dadurch gekennzeichnet, dass** sie nach einem Abrasionstest mit einer Dauer von 450 h einen mittleren Porendurchmesser von 0,05 bis 0,2 µm , vorzugsweise 0,08 bis 0,15 µm aufweist, wobei der Abrasionstest gemäß der Beschreibung im Abschnitt "Abrasionsbeständigkeit" durchgeführt wird.

10. Filtrationsvorrichtung, **dadurch gekennzeichnet, dass** die Filtrationsvorrichtung eine Filtrationsmembran nach einem oder mehreren der Ansprüche 1 bis 9 umfasst.

## Claims

1. Filtration membrane (1), consisting of a porous support (4), configured as a textile nonwoven, and of a membrane layer with a first zone (2) and with a second zone (3) disposed between the first zone (2) and the support (4), **characterized in that** the first zone (2) has a thickness of 5 to 15 µm and a mean pore size of < 0.4 µm and the second zone (3) has a thickness of 5 to 40 µm and a mean pore size of 0.4 to 5.0 µm; in the first zone (2), the mean pore size increases with a mean gradient, determined by the slope of a regression line, of 20 to 80 nm per 1 µm distance from a surface (9) of the filtration membrane (1) that faces away from the support (4); in the second zone (3), the mean pore size increases with a mean gradient, determined by the slope of a regression line, of 200 to 800 nm per 1 µm distance from the surface (9), where the mean pore size is measured on membrane microtome sections by means of scanning transmission electron microscopy, as defined in the description in the section "mean pore size"; the first and second zones (2, 3) consist of polysulfone and polyvinylpyrrolidone, and the filtration membrane (1) has a clean water permeability, measured with purified water at a temperature of 20 °C and in a pressure range of 0.1 to 1 bar, of 200 to 3000 L / (m²·h·bar) .

2. Filtration membrane (1) according to Claim 1, **characterized in that** the first zone (2) has a thickness of 8 to 12 µm.

3. Filtration membrane (1) according to Claim 1 or 2, **characterized in that** the first zone (2) has a mean pore size of ≤ 0.3 µm.

4. Filtration membrane (1) according to one or more of Claims 1 to 3, **characterized in that** the filtration membrane (1) has a mean pore diameter, measured according to ASTM F316-03 (2011) with a capillary flow porometer, of 0.04 to 0.2 µm, preferably of 0.08 to 0.15 µm.

5. Filtration membrane (1) according to one or more of Claims 1 to 4, **characterized in that** the filtration membrane (1) has a clean water permeability, measured with purified water at a temperature of 20 °C and in a pressure range of 0.1 to 1 bar, of 300 to 2000 L / (m²·h·bar) and more particularly of 500 to 1000 L / (m²·h·bar).

6. Filtration membrane (1) according to one or more of Claims 1 to 5, **characterized in that** the second zone (3) has a thickness of 5 to 30 µm, preferably of 10 to 20 µm.

7. Filtration membrane (1) according to one of more of Claims 1 to 6, **characterized in that** the second zone (3) has a mean pore size of 0.4 to 2.0 µm.

8. Filtration membrane (1) according to one of more of Claims 1 to 7, **characterized in that** after an abrasion test with a duration of 450 h, it has a clean water permeability of 500 to 3000 L / (m²·h·bar) , preferably 800 to 1500 L / (m²·h·bar) , the abrasion test being conducted according to the description in the section "Abrasion resistance".

9. Filtration membrane (1) according to one of more of Claims 1 to 8, **characterized in that** after an abrasion test with a duration of 450 h, it has a mean pore diameter of 0.05 to 0.2 µm, preferably 0.08 to 0.15 µm, the abrasion test being conducted according to the description in the section "Abrasion resistance".

10. Filtration device, **characterized in that** the filtration device comprises a filtration membrane according to one of more of Claims 1 to 9.

## Revendications

1. Membrane de filtration (1), consistent d'un support poreux (4) conçu comme un voile textile et une couche de membrane comprenant une première zone (2) et une seconde zone (3) disposée entre la première zone (2) et le support (4), **caractérisée en ce que** la première zone (2) présente une épaisseur de 5 à 15 µm et une ouverture de pores moyenne de < 0,4 µm, et la seconde zone (3) présente une épaisseur de 5 à 40 µm et une ouverture de pores moyenne de 0,4 à 5,0 µm, dans laquelle, dans la première zone (2), l'ouverture de pores moyenne augmente avec un gradient moyen, déterminé par la pente d'une droite de régression, de 20 à 80 nm pour 1 µm de distance d'une surface (9) de la membrane de filtration (1) opposée au support (4), dans laquelle, dans la seconde zone (3), l'ouverture de pores moyenne augmente avec un gradient moyen, déterminé par la pente d'une droite de régression, de 200 à 800 nm pour 1 µm de distance de la surface (9), dans laquelle l'ouverture de pores moyenne est mesurée sur des coupes de microtome de membrane par microscopie électronique à transmission à balayage, tel que défini dans la description dans la section intitulée "Ouverture de pores moyenne", en allemand: *"Mittlere Porenöffnung",* les première et seconde zones (2, 3) étant composées de polysulfone et de polyvinylpyrrolidone, et la membrane de filtration (1) ayant une perméabilité à l'eau claire, mesurée avec de l'eau entièrement déminéralisée à une température de 20 °C et dans une plage de pression de 0,1 à 1 bar, de 200 à 3000 l / (m²·h·bar).

2. Membrane de filtration (1) selon la revendication 1, **caractérisée en ce que** la première zone (2) présente une épaisseur de 8 à 12 µm.

3. Membrane de filtration (1) selon la revendication 1 ou 2, **caractérisée en ce que** la première zone (2) présente une ouverture de pores moyenne de ≤ 0,3 µm.

4. Membrane de filtration (1) selon l'une ou plusieurs des revendications de 1 à 3, **caractérisée en ce que** la membrane de filtration (1) présente une ouverture de pores moyenne, mesurée selon ASTM F316-03 (2011) avec un poromètre à écoulement capillaire, de 0,04 à 0,2 µm, de préférence de 0,08 à 0,15 µm.

5. Membrane de filtration (1) selon l'une ou plusieurs des revendications de 1 à 4, **caractérisée en ce que** la membrane de filtration (1) présente une perméabilité à l'eau claire, mesurée avec de l'eau entièrement déminéralisée à une température de 20 °C et dans une plage de pression de 0,1 à 1 bar, de 300 à 2000 l/(m²·h·bar) et notamment de 500 à 1000 l/(m²·h·bar).

6. Membrane de filtration (1) selon l'une ou plusieurs des revendications de 1 à 5, **caractérisée en ce que** la seconde zone (3) présente une épaisseur de 5 à 30 µm, de préférence de 10 à 20 µm.

7. Membrane de filtration (1) selon l'une ou plusieurs des revendications de 1 à 6, **caractérisée en ce que** la seconde zone (3) présente une ouverture de pores moyenne de 0,4 à 2,0 µm.

8. Membrane de filtration (1) selon l'une ou plusieurs des revendications de 1 à 7, **caractérisée en ce qu'**elle présente une perméabilité à l'eau claire, après un test d'abrasion d'une durée de 450 h, de 500 à 3000 l/(m²·h·bar), de préférence de 800 à 1500 l/(m²·h·bar), le test étant effectué comme décrit dans la section intitulée "Résistance à l'abrasion", en allemand: *"Abrasionsbestândigkeit".*

9. Membrane de filtration (1} selon l'une ou plusieurs des revendications de 1 à 8, **caractérisée en ce qu'**elle présente après un test d'abrasion d'une durée de 450 h une ouverture de pores moyenne de 0,05 à 0,2 µm, de préférence de 0,08 à 0,15 µm, le test étant effectué comme décrit dans la section intitulée "Résistance à l'abrasion", en allemand: *"Abrasionsbeständigkeit".*

10. Dispositif de filtration, **caractérisé en ce que** le dispositif de filtration comprend une membrane de filtration selon l'une ou plusieurs des revendications de 1 à 9.
